(19) Europäisches Patentamt / European Patent Office / Office européen des brevets

(11) **EP 4 535 824 A1**

(12) **DEMANDE DE BREVET EUROPEEN**

(43) Date de publication:
**09.04.2025 Bulletin 2025/15**

(21) Numéro de dépôt: **24203452.8**

(22) Date de dépôt: **30.09.2024**

(51) Classification Internationale des Brevets (IPC):
*H04R 3/00* (2006.01)   *H04R 3/04* (2006.01)
*H04R 3/12* (2006.01)   *H04R 29/00* (2006.01)
*H04R 1/40* (2006.01)   *H04S 7/00* (2006.01)

(52) Classification Coopérative des Brevets (CPC):
**H04R 3/04; H04R 3/005; H04R 3/12; H04R 29/002;**
H04R 1/406; H04R 2201/028; H04R 2201/401;
H04S 7/305

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **03.10.2023 FR 2310553**

(71) Demandeur: **Devialet**
**75001 Paris (FR)**

(72) Inventeurs:
• **MEMBRADO, Jean-Baptiste**
  **75013 PARIS (FR)**
• **LOPEZ ZULETA, Nicolas**
  **93100 MONTREUIL (FR)**

(74) Mandataire: **Lavoix**
**2, place d'Estienne d'Orves**
**75441 Paris Cedex 09 (FR)**

(54) **ENCEINTE COMPRENANT UN DISPOSITIF ÉLECTRONIQUE DE DÉTECTION D'UN MUR**

(57) La présente invention concerne une enceinte (10) comprenant :
- au moins un haut-parleur (20) propre à émettre un signal audio émis,
- plusieurs microphones (25) pour acquérir un signal audio reçu, si un mur (15) est présent dans un environnement de l'enceinte, le signal audio reçu comprenant le signal audio réfléchi sur le mur, et
- un dispositif électronique de détection (30) du mur comprenant un premier module de calcul (35) propre à calculer un spectrogramme des directions d'arrivée du signal audio reçu.

Le dispositif de détection est caractérisé en ce qu'il comprend en outre :
o un deuxième module de calcul (40) propre à calculer un niveau d'énergie du signal audio reçu depuis chaque microphone, et
o un module de détermination (45) propre à déterminer la présence ou l'absence du mur dans l'environnement de l'enceinte à partir d'une modèle à réseau(x) de neurones.

FIG.1

**Description**

La présente invention concerne une enceinte comprenant au moins un haut-parleur propre à émettre un signal audio émis, et plusieurs microphones chacun propre à acquérir un signal audio reçu par l'enceinte.

La présente invention concerne le domaine des enceintes acoustiques, de préférence des enceintes acoustiques portatives, aussi appelées enceintes acoustiques nomades.

De telles enceintes sont généralement propres à être positionnées dans des environnements différents présentant différentes structures.

Or, l'acoustique des sons émis par une enceinte est fortement influencée par l'environnement, et notamment la présence d'obstacles tels que les murs. En effet, lorsque l'enceinte est positionnée à proximité d'un mur, par exemple à moins de 50 cm de ce dernier, les sons émis se réfléchissent sur le mur et se propagent jusqu'à un utilisateur avec un retard par rapport aux sons suivant un trajet direct entre l'enceinte et l'utilisateur.

Ceci conduit à une expérience dégradée pour l'utilisateur de l'enceinte.

Il existe donc un besoin de déterminer la localisation des murs dans l'environnement de l'enceinte acoustique afin de pouvoir adapter l'émission de signaux par l'enceinte pour limiter la dégradation de l'expérience utilisateur.

A cet effet, l'invention a pour objet une enceinte comprenant en outre au moins un haut-parleur propre à émettre un signal audio émis,

- plusieurs microphones chacun propres à acquérir un signal audio reçu, si un mur est présent dans un environnement de l'enceinte, le signal audio reçu comprenant le signal audio émis qui a été réfléchi sur le mur, et
- un dispositif électronique de détection du mur connecté à chaque microphone, le dispositif électronique de détection comprenant :

  ○ un premier module de calcul propre à calculer un spectrogramme des directions d'arrivée d'une composante du signal audio reçu par l'enceinte, à partir du signal audio reçu acquis par chacun des microphones,

  caractérisé en ce que le dispositif électronique de détection comprend en outre :

  ○ un deuxième module de calcul propre à calculer un niveau d'énergie du signal audio reçu acquis depuis chaque microphone, et
  ○ un module de détermination propre à déterminer la présence du mur ou l'absence de mur dans l'environnement de l'enceinte par application d'un modèle à réseau(x) de neurones au spectrogramme des directions d'arrivée et aux niveaux d'énergie déterminés.

Selon des modes de réalisation particuliers, l'enceinte selon l'invention comprend une ou plusieurs des caractéristiques suivantes, prises isolément, ou selon toutes les combinaisons techniquement possibles :

- le modèle à réseau(x) de neurones comprend un premier réseau de neurones à convolution propre à recevoir le spectrogramme des directions d'arrivée, un deuxième réseau de neurones propre à recevoir les niveaux d'énergie, un bloc de concaténation propre à concaténer des données issues des premier et deuxième réseaux de neurones pour former des données concaténées, et un troisième réseau de neurones et propre à traiter les données concaténées pour déterminer la présence ou l'absence du mur,
- le premier réseau de neurones comprend une fenêtre glissante de type circulaire et au moins une couche de neurones, la fenêtre glissante étant propre à être appliquée sur le spectrogramme de directions d'arrivée avant la couche de neurones,
- le modèle à réseau(x) de neurones est propre à, si le mur est présent dans l'environnement de l'enceinte, déterminer une position du mur par rapport à l'enceinte parmi une pluralité de positions prédéfinies, à partir du spectrogramme des directions d'arrivée et des niveaux d'énergie calculés,
- au moins un haut-parleur est propre à émettre le signal audio émis selon un mode de diffusion de l'enceinte, le dispositif électronique de détection comprenant en outre un module d'adaptation propre à reconfigurer le mode de diffusion de l'enceinte en fonction de la détermination de la présence, ou de l'absence, du mur,
- le spectrogramme de directions d'arrivée est une matrice comprenant une pluralité de valeurs, chaque valeur correspondant à la puissance du signal audio reçu par l'enceinte selon un intervalle angulaire prédéfini par rapport à un repère prédéfini centrée sur un centre de l'enceinte, et selon un intervalle fréquentiel prédéfini,
- le signal audio émis est compris dans un flux audio issu d'une instruction de diffusion depuis un utilisateur ; et
- l'enceinte comprend en outre un accéléromètre propre déterminer si l'enceinte est immobile et à émettre une instruction de calcul lorsque l'enceinte est immobile, les premier et deuxième modules de calcul étant propre à calculer le spectrogramme des directions d'arrivée et les niveaux d'énergie suite à la réception de l'instruction de calcul depuis l'accéléromètre.

L'invention a également pour objet un procédé de détection d'un mur dans un environnement d'une enceinte comprenant au moins un haut-parleur, plusieurs microphones et un dispositif électronique de détection du mur connecté à chaque microphone,
le procédé comprenant les étapes suivantes :

- émission d'un signal audio émis par l'au moins un haut-parleur,
- acquisition, par chaque microphone, d'un signal audio reçu, si le mur est présent dans un environnement de l'enceinte, le signal audio reçu comprenant le signal audio qui a été réfléchi sur le mur,
- calcul d'un spectrogramme des directions d'arrivée d'une composante du signal audio reçu par l'enceinte, à partir du signal audio reçu acquis par chaque microphone,

caractérisé en ce que le procédé comprend en outre les étapes suivantes :

- calcul d'un niveau d'énergie du signal audio reçu acquis depuis chaque microphone, et
- détermination de la présence du mur ou de l'absence de mur dans l'environnement de l'enceinte par application d'un modèle à réseau(x) de neurones au spectrogramme des directions d'arrivée et aux niveaux d'énergie déterminés.

L'invention a également pour objet un produit programme d'ordinateur comprenant des instructions logicielles qui, lorsqu'elles sont exécutées par un calculateur, mettent en oeuvre un procédé de détection tel que décrit ci-dessus.
L'invention apparaîtra plus clairement à la lecture de la description qui va suivre, donnée uniquement à titre d'exemple non limitatif, et faite en référence aux dessins dans lesquels :

- la figure 1 est une représentation schématique d'une enceinte selon l'invention ;
- la figure 2 est un exemple d'un spectrogramme des directions d'arrivée propre à être déterminé par un dispositif électronique de détection compris dans l'enceinte de la figure 1 ;
- la figure 3 est un exemple de niveaux d'énergie propres à être déterminés par le dispositif électronique de détection compris dans l'enceinte de la figure 1 ;
- la figure 4 est une représentation schématique d'un modèle à réseau(x) de neurones mis en oeuvre par le dispositif électronique de détection compris dans la figure 1 ; et
- la figure 5 est un organigramme d'un procédé de détection mis en oeuvre par l'enceinte de la figure 1.

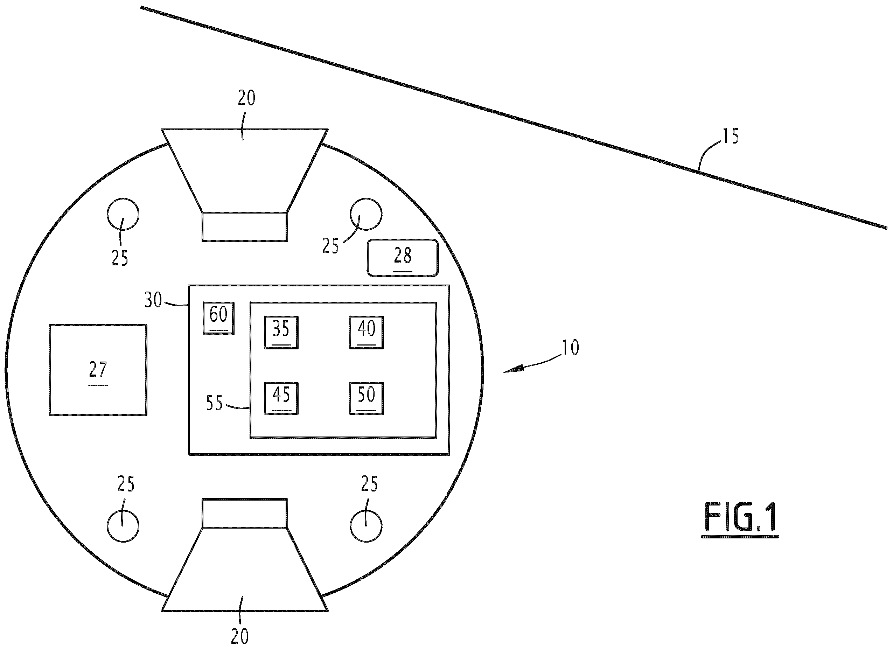

Sur la figure 1 est représenté une enceinte 10 dans un environnement. L'environnement comprend un mur 15 à proximité de l'enceinte 10. On entend par « à proximité », une distance inférieure ou égale à 1m et de préférence inférieure ou égale à 50cm.
L'enceinte 10 comprend au moins un haut-parleur 20 propre à émettre des signaux audio. Préférentiellement, l'enceinte 10 comprend plusieurs haut-parleurs 20, préférentiellement répartis sur la périphérie de l'enceinte 10 pour émettre des signaux audio selon plusieurs directions.
Dans l'exemple de la figure 1, l'enceinte 20 comprend deux haut-parleurs 20.
L'enceinte 10 comprend en outre une pluralité de microphones 25, chacun propre à acquérir les signaux audio présents dans l'environnent de l'enceinte 10. Dans l'exemple de la figure 1, l'enceinte 10 comprend quatre microphones répartis sur la surface extérieure de l'enceinte 10. Les microphones 25 sont préférentiellement angulairement régulièrement espacés les uns des autres. Ainsi, dans l'exemple où l'enceinte 10 comprend quatre microphones 25, les microphones 25 sont angulairement répartis selon un débattement angulaire égale à 90° de sorte à acquérir des signaux audio selon des directions les plus espacées les unes des autres possibles.
L'enceinte 10 comprend en outre un dispositif de commande 27, un accéléromètre 28 et un dispositif électronique de détection 30. Le dispositif de commande 27 est connecté aux haut-parleurs 20 et optionnellement à une source de contenu audio non-représentée, telle qu'un lecteur numérique, un lecteur de disques optiques, un lecteur de disques vinyles ou un téléphone intelligent (de l'anglais, *smartphone*). Le dispositif de commande 27 est propre à recevoir un contenu audio depuis la source, et à envoyer une commande d'excitation aux haut-parleurs 20 pour diffuser le contenu audio reçu. La commande d'excitation provoque alors l'émission d'un signal audio par les haut-parleurs 20, dit signal audio émis. Préférentiellement, le dispositif de commande 27 est propre à envoyer le commande d'excitation selon un premier mode de diffusion de l'enceinte 10 choisi parmi plusieurs modes de diffusion prédéfinis de l'enceinte 10. Par exemple, le mode de diffusion choisi est un mode neutre dans lequel les haut-parleurs 20 sont commandés de manière synchrone.
On comprend alors que le signal audio émis est compris dans un flux audio issu d'une instruction de diffusion depuis un utilisateur. Autrement dit, le signal audio émis est par exemple tout type de musique ou de voix, et n'est pas limité à un signal de test prédéfini.

Si le mur 15 est présent dans l'environnement de l'enceinte 10, le signal audio émis est au moins partiellement réfléchi sur le mur 15.

Chaque microphone 25 est alors propre à acquérir un signal audio reçu par l'enceinte 10 suite à l'émission du signal audio émis par les haut-parleurs 20.

Le signal audio reçu comprend une composante directe qui est le signal audio émis selon le trajet direct entre les haut-parleurs 20 et les microphones 25.

Si le mur 15 est présent dans l'environnement de l'enceinte 10, comme dans l'exemple de la figure 1, le signal audio reçu comprend en outre une composante réfléchie qui est le signal audio émis et réfléchi sur le mur 15.

Optionnellement, le signal audio reçu comprend en outre du bruit. Autrement dit, le signal audio reçu comprend :

- la composante directe et le bruit, si aucun mur 15 n'est présent dans l'environnement de l'enceinte 10 ; ou
- la composante directe, la composante réfléchi, et le bruit, si le mur 15 est présent dans l'environnement de l'enceinte 10.

L'accéléromètre 28 est connecté au dispositif de détection 30. L'accéléromètre 28 est propre à mesurer une accélération de l'enceinte 10 et à envoyer, au dispositif de détection 30, une instruction de calcul lorsque l'enceinte 10 est nouvellement immobile.

Le dispositif électronique de détection 30 comprend un premier module 35 de calcul d'un spectrogramme des directions d'arrivée, un deuxième module 40 de calcul de niveaux d'énergie, un module 45 de détermination de la présence ou de l'absence du mur 15, et optionnellement un module 50 d'adaptation d'un mode de diffusion.

Dans l'exemple de la figure 1, le dispositif électronique de détection 30 est un calculateur formé par exemple d'une mémoire 55 et d'un processeur 60 associé à la mémoire 55.

Dans l'exemple de la figure 1, le premier module de calcul 35, le deuxième module de calcul 40 et le module de détermination 45, ainsi qu'en complément facultatif le module d'adaptation 50 sont réalisés chacun sous forme d'un logiciel, ou d'une brique logicielle, exécutable par le processeur. La mémoire 55 du dispositif électronique de détection 25 est alors apte à stocker un premier logiciel de calcul, un deuxième logiciel de calcul, et un logiciel de détermination, ainsi qu'en complément facultatif un logiciel d'adaptation. Le processeur est alors apte à exécuter chacun des logiciels parmi le premier logiciel de calcul, le deuxième logiciel de calcul, et le logiciel de détection, ainsi qu'en complément facultatif le logiciel d'adaptation.

En variante non-représentée, le premier module de calcul 35, le deuxième module de calcul 40 et le module de détermination 45, ainsi qu'en complément facultatif le module d'adaptation 50, sont réalisés chacun sous forme d'un composant logique programmable, tel qu'un FPGA (de l'anglais *Field Programmable Gate Array),* ou encore d'un circuit intégré, tel qu'un ASIC (de l'anglais *Application Specific Integrated Circuit*).

Lorsque le dispositif électronique de détection 30 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Le dispositif de commande 27 est par exemple également un calculateur comprenant une mémoire non-représentée et un processeur non-représenté.

En variante, le dispositif de détection 30 et le dispositif de commande 27 forment un même calculateur comprenant un unique processeur 60 et une unique mémoire 55. La mémoire 55 stocke alors en outre un logiciel de commande.

Le premier module de calcul 35 est propre à acquérir le signal audio reçu, depuis chaque microphone 25, par exemple suite à la réception de l'instruction de calcul depuis l'accéléromètre 28. Le premier module de calcul 35 est propre à calculer, un spectrogramme des directions d'arrivée sur l'enceinte 10 du signal reçu, à partir du signal audio reçu par l'enceinte 10 et acquis par chacun des microphones 25.Le spectrogramme des directions d'arrivée est calculé à partir de l'ensemble des composantes du signal audio reçu.

A cet effet, le premier module de calcul 35 est par exemple propre à appliquer l'algorithme MUSIC (*MUltiple SIgnal Classification*) connu de l'état de la technique et notamment décrit sur la page internet suivante https://fr.wikipedia. org/wiki/MUSIC_(algorithme). De manière connue en soit l'algorithme MUSIC est configuré pour détecter un signal sonore en provenance d'une direction de recherche. Lorsqu'il détecte un signal sonore en provenance d'une direction particulière, il s'agit nécessairement de la composante réfléchie parce que, par construction, la composante directe arrive de façon identique selon toutes les directions.

L'utilisation de l'algorithme MUSIC permet alors d'identifier une direction d'arrivée privilégiée pour le signal audio reçu.

Si le mur 15 est présent dans l'environnement de l'enceinte 10, la composante identifiée correspond sensiblement à la composante réfléchie du signal audio reçu.

L'algorithme MUSIC fournit une matrice.

Les colonnes de cette matrice représentent les directions d'arrivée autour de l'enceinte 10 selon un premier échantillonnage des directions d'arrivée. Les colonnes correspondent donc à un intervalle angulaire de largeur identique d'une colonne à une autre, dans un repère prédéfini et centré sur un centre de l'enceinte 10.

Les lignes de cette matrice correspondent à des intervalles de fréquence (de l'anglais, *frequency bin*). Par exemple, la matrice comprend 257 lignes.

Chaque valeur de la matrice est associée à une colonne et une ligne, et correspond à la puissance de la composante identifiée par l'algorithme MUSIC, dans l'intervalle angulaire de la colonne associée, et pour l'intervalle de fréquence de la ligne associée.

Le premier module de calcul 35 est en outre optionnellement propre à effectuer un sous-échantillonnage fréquentiel et un lissage en sixième d'octave sur l'axe des fréquences de la matrice pour réduire le nombre de lignes, par exemple à 25 lignes. En variante, le lissage est par exemple réalisé en douzième d'octave, en tiers d'octave ou par octave.

En outre, le premier module de calcul 35 est optionnellement propre à réduire le nombre de colonnes en moyennant les valeurs sur plusieurs intervalles angulaires, par exemple de sorte que la matrice ne comprenne que 8 colonnes. Autrement dit, après que la moyenne soit effectuée, chaque colonne correspond à un intervalle angulaire de 45°.

De plus, le premier module de calcul 35 est préférentiellement propre à normaliser les valeurs de la matrice obtenue de sorte que la valeur de la plus élevée corresponde à la valeur 1 et que les autres valeurs correspondent à des pourcentages de la valeur la plus élevée.

Ainsi, la ou les directions d'arrivée pour lesquels les valeurs sont les plus élevées sont les directions d'arrivée sur l'enceinte 10 les plus probables de la composante réfléchie. Ainsi, cette ou ces directions d'arrivée sont les directions les plus probables dans lesquelles se trouve le mur 15 par rapport à l'enceinte 10.

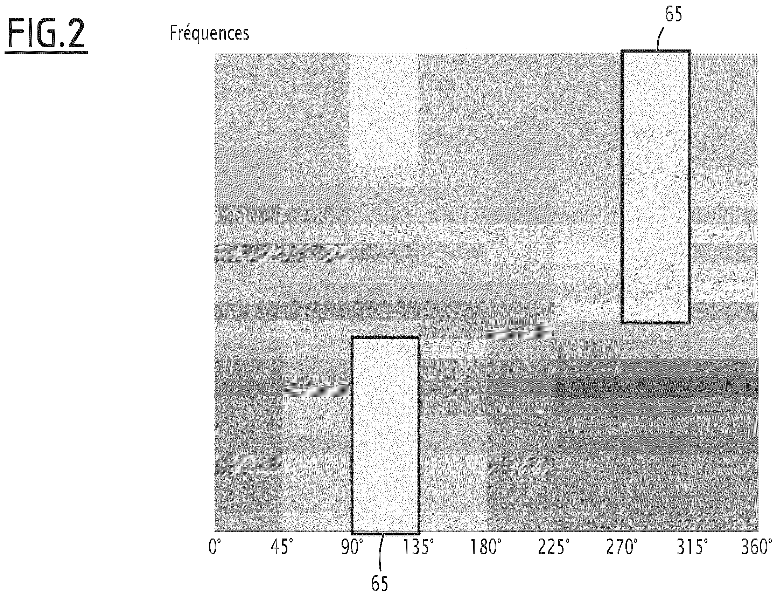

La matrice obtenue par le premier module de calcul 35 est alors le spectrogramme des directions d'arrivée des sources sonores autour de l'enceinte 10, incluant notamment la composante réfléchie identifiée lorsqu'elle est présente. Un exemple d'un tel spectrogramme est illustré sur la figure 2 en niveaux de gris. Sur la figure 2, chaque case correspond à une valeur de la matrice obtenue.

Sur la figure 2, plus une case est claire et plus la puissance sur l'enceinte 10 de la composante réfléchie identifiée est élevée dans l'intervalle de fréquence et l'intervalle angulaire correspondants. Au contraire, plus une case est foncée et moins la puissance de la composante réfléchie identifiée est élevée dans l'intervalle de fréquence et l'intervalle angulaire correspondants.

Sur la figure 2, deux zones 65 sont représentées. Les zones 65 correspondent à des ensembles d'intervalles de fréquences pour lesquels la puissance de la composante réfléchie identifiée est la plus élevée.

Dans l'exemple de la figure 2, ces zones corresponds aux intervalles angulaires compris entre 90° et 135° d'une part, et entre 270° et 315° d'autre part. Il existe donc une ambiguïté de 180° concernant la direction du mur 15 par rapport à l'enceinte 10. Cette ambiguïté résulte du fait que l'algorithme MUSIC est destiné à calculer un spectrogramme des directions d'arrivée dans le contexte d'une source ponctuelle et non d'une réflexion d'un signal audio sur une surface formée par le mur 15.

En outre, la matière du mur 15 influence fréquentiellement la réflexion du signal audio émis. En effet, selon la matière du mur 15 certaines fréquences sont majoritairement absorbées alors que d'autres sont majoritairement réfléchies.

Le deuxième module de calcul 40 est également propre à recevoir, depuis chaque microphone 25, le signal audio reçu, par exemple suite à la réception de l'instruction de calcul depuis l'accéléromètre 28.

Le deuxième module de calcul 40 est propre à calculer un niveau d'énergie du signal audio reçu, acquis depuis chaque microphone 25.

A cet effet, le deuxième module de calcul 40 est propre à calculer le niveau d'énergie du signal audio reçu, acquis par chaque microphone 25 pendant une durée prédéfinie, par exemple 5 secondes. Préférentiellement, le module de calcul 40 est propre à calculer les niveaux d'énergie uniquement sur une bande de fréquence prédéfinie, par exemple comprise entre 20Hz et 20000 Hz.

Par exemple, le niveau d'énergie est calculé à l'aide de la formule suivante :

$$E_i = \Sigma_{t \in [0,T]} \Sigma_{f \in [f_{min}, f_{max}]} \frac{X_i(t,f) \cdot conj(X_i(t,f)}{T \cdot (f_{max} - f_{min})}$$

où : $E_i$ est le niveau d'énergie reçue par le microphone i,
T est la durée prédéfinie,

$f_{min}$ et $f_{max}$ sont respectivement les fréquences minimale et maximale de la bande de fréquence,

$X_i(t, f)$ est le signal audio reçu par le microphone $i$ à l'instant $t$ et à la fréquence $f$, dans e domaine fréquentielle, et

$con_j(.)$ est la fonction de conjuguée complexe.

Le deuxième module de calcul 40 est propre à normaliser les niveaux d'énergie de sorte que le niveau d'énergie le plus élevé soit égal à 1 et que les autres niveaux d'énergie soient égaux à des pourcentages du niveau d'énergie le plus élevé.

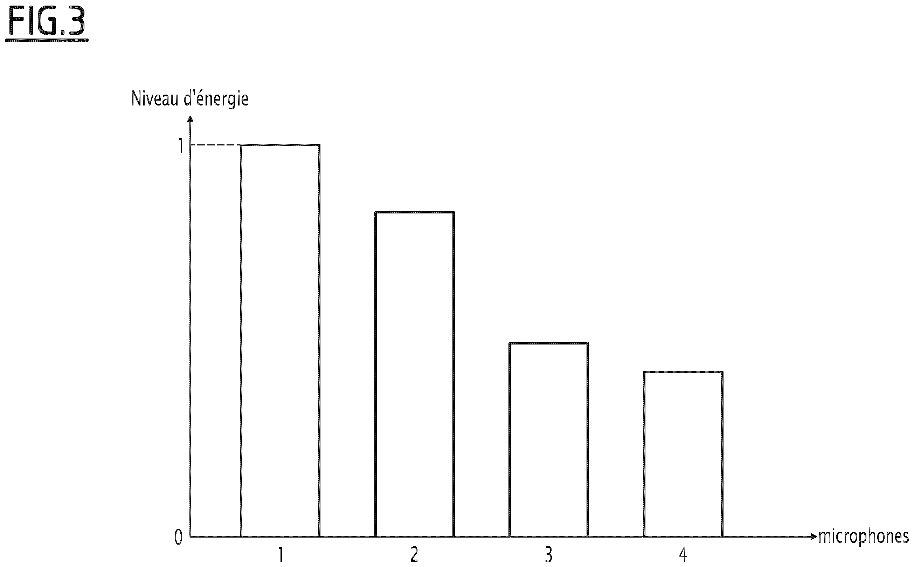

La figure 3 représente un exemple de niveaux d'énergie calculés. Il est visible sur la figure 3 que le premier microphone 25 acquiert le signal audio reçu avec le niveau d'énergie le plus élevé, i.e. niveau normalisé égal à 1. Il est également visible que les autres microphones 25 acquièrent le signal audio reçu avec un niveau d'énergie plus faible, i.e. niveau normalisé compris entre 0 et 1.

De nouveau en référence à la figure 1, le module de détermination 45 est connecté aux premier 35 et deuxième 40 module de calcul.

Le module de détermination 45 est propre à déterminer la présence du mur 15 ou l'absence du mur 15 dans l'environnement de l'enceinte 10 par application d'un modèle à réseaux de neurones 70 au spectrogramme des directions d'arrivée et aux niveaux d'énergie déterminés.

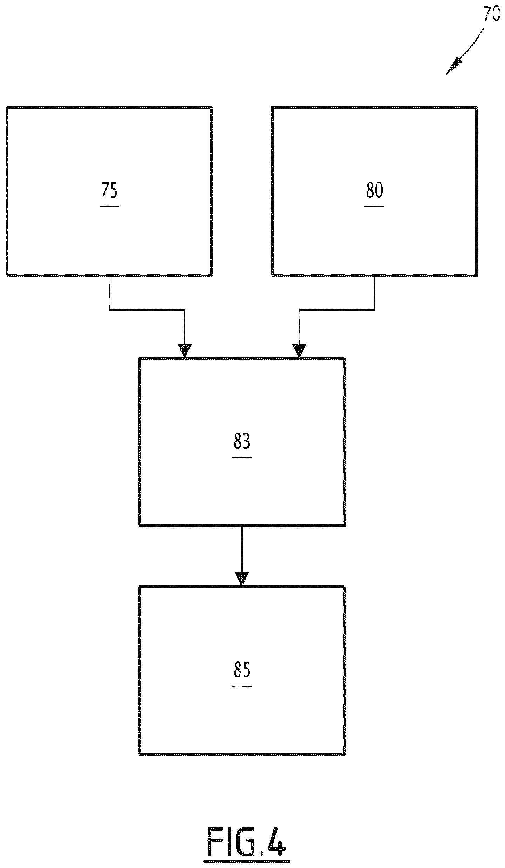

La figure 4 illustre une architecture du modèle à réseaux de neurones 70 mis en oeuvre par le module de détermination 45.

Le modèle à réseaux de neurones 70 comprend un premier réseau de neurones 75 à convolution propre à recevoir le spectrogramme des directions d'arrivée, un deuxième réseau de neurones 80 propre à recevoir les niveaux d'énergie, un bloc de concaténation 83 destiné concaténer des données issues des premier 75 et deuxième 80 réseaux de neurones pour former des données concaténées, et un troisième réseau de neurones 85 et propre à traiter les données concaténées pour déterminer la présence ou l'absence du mur 15.

Chaque réseau de neurones comporte une succession ordonnée de couches de neurones dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

À chaque neurone est également associée une opération, c'est-à-dire un type de traitement, à effectuer par ledit neurone au sein de la couche de traitement correspondante.

Chaque couche est reliée aux autres couches par une pluralité de synapses. Un poids synaptique est associé à chaque synapse, et chaque synapse forme une liaison entre deux neurones. Chaque poids synaptique est préférentiellement un nombre réel, qui prend des valeurs positives comme négatives. Dans certains cas, chaque poids synaptique est un nombre complexe.

Chaque neurone est propre à effectuer une somme pondérée des valeur(s) reçue(s) de la part des neurones de la couche précédente, chaque valeur étant alors multipliée par le poids synaptique respectif de chaque synapse, ou liaison, entre ledit neurone et les neurones de la couche précédente, puis à appliquer une fonction d'activation, typiquement une fonction non-linéaire, à ladite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside, la fonction Unité Linéaire Rectifiée aussi appelée fonction ReLU (de l'anglais, *Rectified Linear Unit*), ou la fonction softmax, sont des exemples de fonction d'activation.

En complément facultatif, chaque neurone est également apte à appliquer, en outre, un facteur multiplicatif, également appelé biais, à la sortie de la fonction d'activation, et la valeur délivrée en sortie dudit neurone est alors le produit de la valeur de biais et de la valeur issue de la fonction d'activation.

Un réseau de neurones à convolution est aussi parfois dénommé réseau de neurones convolutif ou par le sigle CNN (de l'anglais, *Convolutional Neural Networks*).

Dans un réseau de neurones à convolution, chaque neurone d'une même couche présente exactement le même schéma de connexion que ses neurones voisins, mais à différentes positions d'entrée. Le motif de connexion est appelé noyau de convolution ou, plus souvent, « *kernel* » en référence à la dénomination anglaise correspondante.

Une couche de neurones entièrement connectée est une couche dans laquelle les neurones de ladite couche sont chacun connectés à tous les neurones de la couche précédente.

Un tel type de couche est plus souvent dénommé selon le terme anglais de « *fully connected* », et parfois désigné sous la dénomination « *couche dense* ».

Le premier réseau de neurones 75 comprend une fenêtre glissante de type circulaire (de l'anglais, *circular padding*) et au moins une couche de neurones. Préférentiellement, le premier réseau de neurones 75 comprend trois couches de neurones.

La fenêtre glissante comprend un noyau (de l'anglais *kernel*) de largeur M et de hauteur N, M étant inférieur au nombre de colonnes de la matrice formant le spectrogramme, N étant inférieur au nombre de lignes de ladite matrice. La fenêtre est propre à se déplacer dans le spectrogramme pour former des sous-matrices de dimensions M par N. Les sous-matrices sont fournies à l'au moins une couche de neurones.

Le type circulaire de la fenêtre glissante est tel que la fenêtre est propre à former des sous-matrices comprenant des valeurs de la première colonne et de la dernière colonne. Autrement dit, la fenêtre glissante se déplace sur le spectrogramme comme si la première colonne de la matrice correspondante était contigue de la dernière colonne, i.e. comme si le spectrogramme formait un cylindre.

La fenêtre glissante est propre à être appliquée sur le spectrogramme de directions d'arrivée, calculé par le premier module de calcul 35, avant la ou chaque couche de neurones.

Ainsi, le spectrogramme des directions d'arrivée est traité comme une image par le premier réseau de neurones 75.

Le premier réseau de neurones 75 fournit, en sa sortie, des premières données.

Le deuxième réseau de neurones 80 est un réseau de neurones du type fully connected. Le deuxième réseau de neurones 80 est propre à prendre en entrée un vecteur comprenant le niveau d'énergie normalisé de chaque microphone 25 calculé par le deuxième module de calcul 40.

Le deuxième réseau de neurones 80 fournit en sa sortie des deuxièmes données.

Le bloc de concaténation 83 est connecté en sortie des premiers 75 et deuxième 80 réseaux de neurones et est propre à concaténer les premières et les deuxièmes données dans un unique vecteur pour former des données concaténées.

Le troisième réseau de neurones 85 est connecté au bloc de concaténation 83. Le troisième réseau de neurones 85 est par exemple du type fully connected.

Le troisième réseau de neurones 85 est préférentiellement propre à classer les données concaténées parmi une pluralité de classes, par exemple neuf classes.

Par exemple, chaque classe sauf une, correspond à une position prédéfinie du mur 15 par rapport à l'enceinte 10, la dernière classe correspondant à l'absence de mur 15. La position du mur 15 est définie ici comme la direction dans lequel se trouve le mur 15 par rapport à l'enceinte 10 dans un repère prédéfini centré sur l'enceinte 10. Ainsi, chaque classe correspond à une position prédéfinie du mur 15, définie par un intervalle angulaire dans lequel se trouve le mur 15 par rapport à l'enceinte 10.

Si la pluralité de classes comprend neuf classes, chacune des huit premières classes correspond à un intervalle angulaire de 45°, la neuvième classe correspondant à l'absence de mur 15.

A cet effet, le troisième réseau de neurones 85 est propre à fournir en sa sortie un vecteur de sortie comprenant neuf composantes. La fonction d'activation des neurones de la dernière couche du troisième réseau de neurones 85 est préférentiellement la fonction softmax. Ainsi, la valeur de chaque composante du vecteur de sortie est comprise entre 0 et 1, et la somme des valeurs de toutes les composantes dudit vecteur est égale à 1. La valeur de chaque composante est alors une probabilité d'appartenance à la classe correspondante.

Le module de détermination 45 est par exemple propre à déterminer l'absence du mur 15 si la composante du vecteur de sortie ayant la valeur la plus élevée est la composante associée à la classe correspondant à l'absence du mur 15. Le module de détermination 45 est alors propre à déterminer la présence du mur 15 sinon.

En complément facultatif, le module de détermination 45 est en outre propre à déterminer position du mur 15 comme étant la position définie par la classe dont la composante de sortie a la valeur la plus élevée dans le vecteur de sortie.

Optionnellement, le module de détermination 45 est configuré pour comparer ladite valeur la plus élevée à un seuil prédéfini. Si la valeur la plus élevée est inférieure au seuil préfini alors le module de détermination 45 est propre à déterminer que la détection du mur 15 n'est pas concluante et à commander la réitération des calculs par les premier 35 et deuxième 40 modules de calcul à partir de deuxième signaux audio acquis à un instant postérieur.

Le module d'adaptation 50 est propre à recevoir la position du mur 15, ou une information sur l'absence de mur 15, depuis le module de détermination 45.

Le module d'adaptation 50 est propre à reconfigurer le mode de diffusion de l'enceinte 10 en fonction de la détermination de la présence ou de l'absence du mur 15, et plus préférentiellement en fonction de la position dudit mur 15 le cas échéant.

Dans l'exemple de la figure 1, un mode de diffusion est associé à chacune des positions du mur 15 suivantes : en face d'un des haut-parleurs 20, en face de l'autre haut-parleur 20, à 90° d'une ligne rejoignant les deux haut-parleurs 20 dans un sens, et à 90° de la ligne rejoignant les deux haut-parleurs 20 dans le sens opposé. Ainsi, quatre modes de diffusion sont définis par ces positions.

Pour chacun de ces quatre modes de diffusion, un retard est par exemple appliqué par le dispositif de commande 27 à l'un des haut-parleurs 20 pour compenser la présence du mur 15.

Un cinquième mode de diffusion est défini comme un mode de diffusion neutre dans lequel les haut-parleurs 20 sont commandés de manière synchrone, i.e. sans retard. Le module d'adaptation 50 est par exemple propre à associer le cinquième mode de diffusion à toutes les autres positions et à la détermination de l'absence de mur 15.

EP 4 535 824 A1

Dans le cinquième mode de diffusion, une égalisation des différents canaux, en phase et en amplitude, est préférentiellement réalisée.

Dans les premier, deuxième, troisième et quatrième mode de diffusion, d'autres traitements sont préférentiellement également réalisés pour améliorer encore le rendu sonore pour un utilisateur localisé à l'opposé du mur par rapport à l'enceinte 10. Par exemple, ces traitements comprennent une égalisation en phase et en amplitude, et une décomposition du signal en composantes à diffuser à l'avant et à l'arrière de l'enceinte 10.

Le module d'adaptation 50 est adapté pour envoyer le mode de diffusion reconfiguré au dispositif de commande 27 pour qu'il commande les haut-parleurs 20 conformément à ce mode de diffusion reconfiguré.

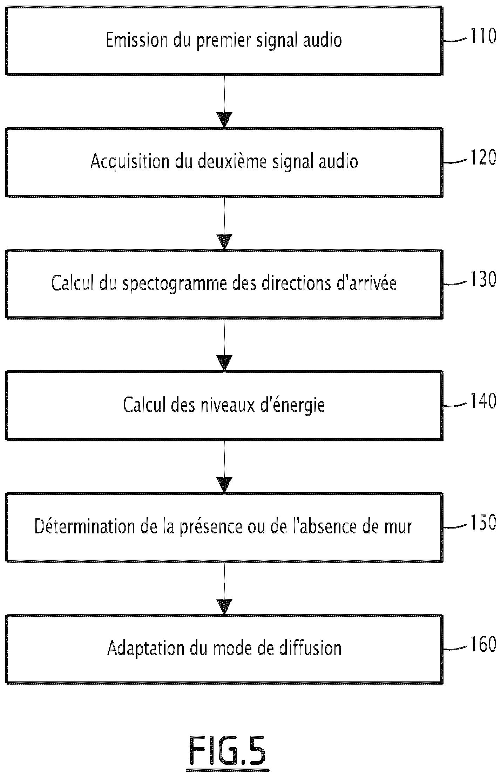

Le fonctionnement de l'enceinte 10 va maintenant être décrit en référence à la figure 5 illustrant un organigramme d'un procédé de détermination de la présence ou l'absence du mur 15.

Lors d'une étape d'émission 110, le dispositif de commande 27 reçoit un contenu audio depuis la source, et envoie une commande d'excitation aux haut-parleurs 20 pour émettre le contenu audio.

A un instant, l'accéléromètre 28 détecte que l'enceinte devenue immobile suite à un mouvement. L'accéléromètre envoie alors, au dispositif de détection 30, une instruction indiquant que l'enceinte 10 est devenu immobile. Le contenu audio émis par les haut-parleurs 20 à partir de cet instant est le signal audio émis.

Lors d'une étape d'acquisition 120, chaque microphone 25 acquiert le signal audio reçu.

Puis, lors d'une première étape de calcul 130, le premier module de calcul 35 calcule le spectrogramme des directions d'arrivée de la composante du signal audio reçu par l'enceinte 10, à partir du signal audio reçu, acquis par chacun des microphones 25, par exemple tel que décrit précédemment.

Lors d'une deuxième étape de calcul 140, le deuxième module de calcul 40 calcule le niveau d'énergie du signal audio reçu, acquis depuis chaque microphone 25, par exemple comme expliqué précédemment.

Préférentiellement, la première 130 et la deuxième 140 étapes de calcul sont mises en oeuvre simultanément.

Puis, lors d'une étape de détermination 150, le module de détermination 45 détermine la présence du mur 15 ou l'absence du mur 15 dans l'environnement de l'enceinte 10, par application du modèle à réseau de neurones 70 au spectrogramme des directions d'arrivée et aux niveaux d'énergie calculés.

Par exemple, le module de détermination 45 applique le premier réseau de neurones 75 au spectrogramme pour obtenir les premières données et le deuxième réseau de neurones 80 aux niveaux d'énergie pour obtenir les deuxièmes données. Le module de détermine 45 applique ensuite le bloc de concaténation 83 aux premières et deuxièmes données pour former les données concaténées. Le module de détermination 45 fournit ensuite les données concaténées au troisième réseau de neurones 85 pour déterminer le vecteur de sortie.

Selon ce complément facultatif, le module de détermination 45 détermine la position du mur 15 par rapport à l'enceinte 10 ou l'absence de mur 15, comme indiqué précédemment, à partir du vecteur de sortie.

Optionnellement, lors d'une étape d'adaptation 160, le module d'adaptation 50 reconfigure le mode de diffusion de l'enceinte 10 en fonction de la position du mur 15 par rapport à l'enceinte 10, ou de l'absence de mur 15, par exemple en envoyant la mode de diffusion reconfiguré au dispositif de commande 27.

Avec l'enceinte 10 selon l'invention, la présence du mur 15, ou son absence, est détectée avec précision.

## Revendications

1. Enceinte (10) comprenant :

   - au moins un haut-parleur (20) propre à émettre un signal audio émis,
   - plusieurs microphones (25) chacun propres à acquérir un signal audio reçu, si un mur (15) est présent dans un environnement de l'enceinte (10), le signal audio reçu comprenant le signal audio émis qui a été réfléchi sur le mur (15), et
   - un dispositif électronique de détection (30) du mur (15) connecté à chaque microphone,

   le dispositif électronique de détection comprenant :

   ○ un premier module de calcul (35) propre à calculer un spectrogramme des directions d'arrivée du signal audio reçu par l'enceinte (10), à partir du signal audio reçu acquis par chacun des microphones (25),

   **caractérisé en ce que** le dispositif électronique de détection comprend en outre :

   ○ un deuxième module de calcul (40) propre à calculer un niveau d'énergie du signal audio reçu acquis depuis chaque microphone (25), et
   ○ un module de détermination (45) propre à déterminer la présence du mur (15) ou l'absence de mur (15) dans l'environnement de l'enceinte (10) par application d'un modèle à réseau(x) de neurones (70) au spectrogramme des directions d'arrivée et aux niveaux d'énergie déterminés.

2. Enceinte (10) selon la revendication précédente, dans lequel le modèle à réseau(x) de neurones (70) comprend un premier réseau de neurones (75) à convolution propre à recevoir le spectrogramme des directions d'arrivée, un deuxième réseau de neurones (80) propre à recevoir les niveaux d'énergie, un bloc de concaténation (83) propre à concaténer des données issues des premier (75) et deuxième (80) réseaux de neurones pour former des données concaténées, et un troisième réseau de neurones (85) et propre à traiter les données concaténées pour déterminer la présence ou l'absence du mur (15).

3. Enceinte (10) selon la revendication 2, dans lequel le premier réseau de neurones (75) comprend une fenêtre glissante de type circulaire et au moins une couche de neurones, la fenêtre glissante étant propre à être appliquée sur le spectrogramme de directions d'arrivée avant la couche de neurones.

4. Enceinte (10) selon l'une quelconque des revendications précédentes, dans lequel le modèle à réseau(x) de neurones (70) est propre à, si le mur (15) est présent dans l'environnement de l'enceinte (10), déterminer une position du mur (15) par rapport à l'enceinte (10) parmi une pluralité de positions prédéfinies, à partir du spectrogramme des directions d'arrivée et des niveaux d'énergie calculés.

5. Enceinte (10) selon l'une quelconque des revendications précédentes, dans lequel l'au moins un haut-parleur (20) est propre à émettre le signal audio émis selon un mode de diffusion de l'enceinte (10), le dispositif électronique de détection (30) comprenant en outre un module d'adaptation (50) propre à reconfigurer le mode de diffusion de l'enceinte (10) en fonction de la détermination de la présence, ou de l'absence, du mur (15).

6. Enceinte (10) selon l'une quelconque des revendications précédentes, dans lequel le spectrogramme de directions d'arrivée est une matrice comprenant une pluralité de valeurs, chaque valeur correspondant à la puissance du signal audio reçu par l'enceinte (10) selon un intervalle angulaire prédéfini par rapport à un repère prédéfini centrée sur un centre de l'enceinte (10), et selon un intervalle fréquentiel prédéfini.

7. Enceinte (10) selon l'une quelconque des revendications précédentes, dans lequel le signal audio émis est compris dans un flux audio issu d'une instruction de diffusion depuis un utilisateur.

8. Enceinte (10) selon l'une quelconque des revendications précédentes, comprenant en outre un accéléromètre (28) propre déterminer si l'enceinte (10) est immobile et à émettre une instruction de calcul lorsque l'enceinte (10) est immobile, les premier (35) et deuxième (40) modules de calcul étant propre à calculer le spectrogramme des directions d'arrivée et les niveaux d'énergie suite à la réception de l'instruction de calcul depuis l'accéléromètre (28).

9. Procédé de détection d'un mur (15) dans un environnement d'une enceinte (10) comprenant au moins un haut-parleur (20), plusieurs microphones (25) et un dispositif électronique (30) de détection du mur (15) connecté à chaque microphone (25), le procédé comprenant les étapes suivantes :

   - émission (110) d'un signal audio émis par l'au moins un haut-parleur (20),
   - acquisition (120), par chaque microphone (25), d'un signal audio reçu, si le mur (15) est présent dans un environnement de l'enceinte (10), le signal audio reçu comprenant le signal audio qui a été réfléchi sur le mur (15),
   - calcul (130) d'un spectrogramme des directions d'arrivée du signal audio reçu par l'enceinte (10), à partir du signal audio reçu acquis par chaque microphone (25),

   **caractérisé en ce que** le procédé comprend en outre les étapes suivantes :

   - calcul (140) d'un niveau d'énergie du signal audio reçu acquis depuis chaque microphone (25), et
   - détermination de la présence du mur (15) ou de l'absence de mur (15) dans l'environnement de l'enceinte (10) par application d'un modèle à réseau(x) de neurones (70) au spectrogramme des directions d'arrivée et aux niveaux d'énergie déterminés.

10. Produit programme d'ordinateur comprenant des instructions logicielles qui, lorsqu'elles sont exécutées par un calculateur, mettent en oeuvre un procédé de détection selon la revendication précédente.

FIG.1

FIG.2

# FIG.3

EP 4 535 824 A1

70

75

80

83

85

FIG.4

Emission du premier signal audio — 110

Acquisition du deuxième signal audio — 120

Calcul du spectogramme des directions d'arrivée — 130

Calcul des niveaux d'énergie — 140

Détermination de la présence ou de l'absence de mur — 150

Adaptation du mode de diffusion — 160

FIG.5

Europäisches
Patentamt

European
Patent Office

Office européen
des brevets

**RAPPORT DE RECHERCHE EUROPEENNE**

Numéro de la demande

EP 24 20 3452

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 10 959 018 B1 (SHI GUANGJI [US] ET AL) 23 mars 2021 (2021-03-23) * colonne 1, ligne 65 - colonne 2, ligne 46; figure 1 * * colonne 10, ligne 40 - ligne 65 * * colonne 15, ligne 53 - colonne 17, ligne 27; figure 4 * * colonne 18, ligne 26 - colonne 19, ligne 3; figure 5 * * colonne 21, ligne 14 - colonne 22, ligne 30; figure 6C * * colonne 24, ligne 4 - colonne 25, ligne 31; figures 8A-8B * | 1-10 | INV. H04R3/00 H04R3/04 H04R3/12 H04R29/00 ADD. H04R1/40 H04S7/00 |
| A | CN 114 501 231 A (BEIJING SOUND PLUS SCIENCE AND TECH LIMITED COMPANY) 13 mai 2022 (2022-05-13) * le document en entier * | 1-10 | |
| A | US 2019/391783 A1 (MOORE JONATHAN [GB]) 26 décembre 2019 (2019-12-26) * alinéa [0226] - alinéa [0240]; figures 25-27 * * alinéa [0120] * | 1-10 | **DOMAINES TECHNIQUES RECHERCHES (IPC)** H04R H04S |

Le présent rapport a été établi pour toutes les revendications

| Lieu de la recherche | Date d'achèvement de la recherche | Examinateur |
|---|---|---|
| Munich | 7 février 2025 | Guillaume, Mathieu |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 20 3452

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-02-2025

| Document brevet cité au rapport de recherche | | Date de publication | Membre(s) de la famille de brevet(s) | Date de publication |
|---|---|---|---|---|
| US 10959018 | B1 | 23-03-2021 | AUCUN | |
| CN 114501231 | A | 13-05-2022 | AUCUN | |
| US 2019391783 | A1 | 26-12-2019 | AUCUN | |

EPO FORM P0460

Pour tout renseignement concernant cette annexe : voir Journal Officiel de l'Office européen des brevets, No.12/82